# EUROPÄISCHE PATENTSCHRIFT

(11) **EP 3 515 765 B1**
(45) Veröffentlichungstag und Bekanntmachung des Hinweises auf die Patenterteilung: **02.09.2020**
(21) Anmeldenummer: 17769072.4
(22) Anmeldetag: 20.09.2017
(51) Int. Cl.: B60T 8/36, H01F 7/18

(54) **VERFAHREN ZUM BETREIBEN EINES BREMSSYSTEMS**
METHOD FOR OPERATING A BRAKE SYSTEM
PROCÉDÉ POUR FAIRE FONCTIONNER UN SYSTÈME DE FREINAGE

(30) Priorität: 23.09.2016 DE 102016218337
(43) Veröffentlichungstag der Anmeldung: 31.07.2019
(73) Patentinhaber: Continental Teves AG & Co. OHG, 60488 Frankfurt am Main (DE)
(72) Erfinder: HITZEL, Michael, 63322 Rödermark (DE); HOFFMANN, Ulfilas, 17498 Mesekenhagen (DE); SCHELLER, Tobias, 36145 Hofbieber (DE); KOSSHOF, Daniel, 65510 Idstein (DE); HOFFMANN, Ansgar, 60488 Frankfurt am Main (DE)
(86) Internationale Anmeldenummer: PCT/EP2017/073708
(87) Internationale Veröffentlichungsnummer: WO 2018/054937

(56) Entgegenhaltungen:
- WO-A1-2010/079011
- DE-A1- 10 320 521
- DE-A1- 19 725 239
- DE-A1-102009 052 485
- GB-A- 2 321 684

## Beschreibung

Die Erfindung betrifft ein Verfahren zum Betreiben eines Bremssystems eines Kraftfahrzeugs.

Ein solches Bremssystem weist typischerweise einen ersten hydraulischen Kreis, einen zweiten hydraulischen Kreis und einen Hauptbremszylinder auf. Der Hauptbremszylinder wird typischerweise dazu verwendet, um in den hydraulischen Kreisen Druck aufzubauen, damit eine Bremse betätigt werden kann. Der Hauptbremszylinder wird hierzu typischerweise von einem Bremspedal betätigt.

Derartige Zweikreisbremssysteme sind heutzutage Standard in den meisten Kraftfahrzeugen. Es wird dadurch insbesondere sichergestellt, dass bei Ausfall eines hydraulischen Kreises noch ein weiterer hydraulischer Kreis vorhanden ist. Beispielsweise kann ein hydraulischer Kreis auf die Vorderräder und ein anderer hydraulischer Kreis auf die Hinterräder wirken, oder die hydraulischen Kreise können über Kreuz wirken.

Durch die Zunahme an Funktionalitäten, welche in Fahrzeugen automatisiert ablaufen sollen oder welche zur Unterstützung des Fahrers dienen, ist es typischerweise mittlerweile erforderlich, dass in den hydraulischen Kreisen jeweils eine Pumpe vorhanden ist, welche unabhängig vom Hauptbremszylinder Druck aufbauen kann. Derartige Pumpen werden typischerweise mit Elektromotoren betrieben.

Derartige Elektromotoren werden typischerweise über ein Bordnetz des Fahrzeugs gespeist, führen dementsprechend zu einem erhöhten Stromverbrauch und müssen auch bei der Auslegung des Bordnetzes berücksichtigt werden.

So ist aus der DE 197 25 239 A1 ein Verfahren zum Ansteuern einer Bremsanlage mit mehreren Bremskreisen bekannt, mit einem Tandemhauptzylinder und je einer hydraulischen Rückförderpumpe je Bremskreis zum Druckaufbau. Je Bremskreis ist ein Druckraum des Tandemhauptzylinders über ein Schaltventil mit einer Saugseite der jeweiligen Pumpe verbunden. Von der Druckseite der Pumpe strömt das eingesetzte Druckmittel zu elektromagnetischen Einlassventilen und über diese zu den Bremszylindern. Um Ventiltreiber einzusparen werden die Schaltventile eines ersten Bremskreises und eines zweiten Bremskreises parallel durch einen einzigen Ventiltreiber gesteuert.

Die DE 10 2009 052 485 A1 beschreibt einen Druckerzeuger mit mehreren Pumpenanordnungen für eine mehrkreisige hydraulische Fahrzeugbremsanlage. Um dem unterschiedlichen Fluidbedarf in einem ersten Bremskreis und einem zweiten Bremskreis Rechnung zu tragen, können unterschiedlich dimensionierte Pumpenanordnungen oder eine unterschiedliche Anzahl von Pumpenanordnung den einzelnen Bremskreisen zugeordnet sein.

Die WO 2010 /079011 beschreibt ebenfalls eine Pumpeneinheit für Bremsanlagen von Fahrzeugen mit mindestens zwei hydraulischen Bremskreisen. Die Pumpeneinheit weist pro Bremskreis mindestens einen Förderkolben auf, der über einen Exzenternocken angetrieben wird. Um in den beiden Bremskreisen verschiedene hohe Förderströme zu realisieren, weisen die Exzenternocken von erstem und zweitem Bremskreis eine unterschiedlich hohe Exzentrizität auf.

Aus der DE 103 20 521 A1 ist bekannt mittels einer Pulsweitenmodulation eine kontinuierliche Regelung von Schaltventilen durchzuführen, wobei die Ansteuersignale der Schaltventile zur Reduktion von Geräuschentwicklung und Lastspitzen eine Phasenverschiebung aufweisen können.

Typischerweise ist bei einem wie beschrieben ausgeführten Bremssystem eine Funktionalität eines Antiblockiersystems vorhanden. Dieses sorgt insbesondere dafür, dass ein Blockieren von Rädern beim Abbremsen vermieden wird.

In letzter Zeit werden jedoch zunehmend auch Notbremsassistenten eingebaut, welche auch als Automatic Emergency Brake (AEB) bezeichnet werden können.

Durch die Einführung von Notbremsassistenten hat sich die Charakteristik der verbauten Pumpen und Elektromotoren insofern verändert, als für Notbremsassistenten erheblich höhere Volumenströme der jeweiligen Pumpe erforderlich sind. Pumpengröße und Motorauslegung werden typischerweise daraufhin angepasst. Derartige Pumpen haben insbesondere im für Notbremsassistenten relevanten Druckbereich von etwa 0 bis 100 bar eine deutlich höhere Pumpleistung, welche für den schnellen Druckaufbau zur Notbremsung erforderlich ist. Daraus resultiert zwangsläufig auch eine wesentlich höhere Pumpleistung im Arbeitspunkt bei 200 bar, welcher für Antiblockiersysteme (ABS) relevant ist. Diese Pumpleistung wird jedoch für die Funktionalität eines Antiblockiersystems funktional gar nicht benötigt. Trotzdem führt sie zu einem höheren Strombedarf, welcher auch bei der Auslegung des Bordnetzes zu berücksichtigen ist.

Es ist deshalb wünschenswert, den Strombedarf zu senken, ohne die beschriebenen Funktionalitäten, insbesondere die Funktionalität eines Antiblockiersystems, zu beeinflussen.

Dies wird erfindungsgemäß durch ein Verfahren nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung betrifft ein Verfahren zum Betreiben eines Bremssystems eines Kraftfahrzeugs. Das Bremssystem weist einen ersten hydraulischen Kreis, einen zweiten hydraulischen Kreis und einen Hauptbremszylinder auf.

Bezüglich der Funktionalitäten sei hier insbesondere auch auf die eingangs bereits erfolgte Beschreibung verwiesen.

Der erste hydraulische Kreis weist zumindest eine erste Hydraulikpumpe, einen ersten Niederdruckspeicher, ein erstes Rückschlagventil und ein erstes Umschaltventil auf, wobei der erste Niederdruckspeicher über das erste Rückschlagventil mit einem ersten Ansauganschluss der ersten Hydraulikpumpe verbunden ist, so dass eine Durchflussrichtung des ersten Rückschlagventils zum ersten Ansauganschluss hinweist, und wobei der Hauptbremszylinder über das erste Umschaltventil mit dem ersten Ansauganschluss verbunden ist.

Der zweite hydraulische Kreis weist zumindest eine zweite Hydraulikpumpe, einen zweiten Niederdruckspeicher, ein zweites Rückschlagventil und ein zweites Umschaltventil auf, wobei der zweite Niederdruckspeicher über das zweite Rückschlagventil mit einem zweiten Ansauganschluss der zweiten Hydraulikpumpe verbunden ist, so dass eine Durchflussrichtung des zweiten Rückschlagventils zum zweiten Ansauganschluss hinweist, und wobei der Hauptbremszylinder über das zweite Umschaltventil mit dem zweiten Ansauganschluss verbunden ist.

Während kontinuierlichem Lauf der ersten Hydraulikpumpe und der zweiten Hydraulikpumpe werden das erste Umschaltventil und das zweite Umschaltventil alternierend zueinander geöffnet und geschlossen.

Durch die erfindungsgemäße Verfahrensführung wird erreicht, dass die Pumpleistungen der beiden Hydraulikpumpen sinnvoll verteilt werden. Es kann beispielsweise davon gesprochen werden, dass die Hydraulikpumpen abwechselnd betrieben werden, so dass insgesamt jede Hydraulikpumpe nur etwa die halbe Pumpleistung erbringt, da sie nur etwa die halbe Zeit betrieben wird. Dies erlaubt es, einen entsprechend niedrigeren Stromverbrauch zu erreichen, da die Pumpleistung entsprechend niedriger ist als wenn beide Hydraulikpumpen durchlaufen würden. Die niedrigere Pumpleistung ist jedoch typischerweise für die Funktionalität eines Antiblockiersystems ausreichend.

Die erste Hydraulikpumpe und die zweite Hydraulikpumpe werden bevorzugt von einem einzigen Motor, insbesondere von einem Elektromotor, angetrieben.

Das Verfahren kann insbesondere während eines Antiblockiersystem-Eingriffs ausgeführt werden. Dies kann insbesondere bei einem Betriebspunkt von 150 bar bis 250 bar, bevorzugt 200 bar, erfolgen. Für eine derartige Funktionalität hat sich das Verfahren als besonders vorteilhaft erwiesen, da es Strom einspart und eine niedrigere Auslegung des Bordnetzes ermöglicht.

Bevorzugt werden das erste Umschaltventil und das zweite Umschaltventil derart alternierend geschaltet, dass immer eines der Umschaltventile offen und das andere der Umschaltventile geschlossen ist. Somit wird die an beiden Hydraulikpumpen angreifende Motorleistung immer nur auf eine Hydraulikpumpe wirkend geschalten. Die Belastung des Motors und damit der Stromverbrauch werden damit reduziert.

Gemäß einer Ausführung werden die Umschaltventile derart geschaltet, dass sie jeweils gleich lange Zeiten offen und geschlossen sind. Damit kann insbesondere eine gleiche Förderleistung der Hydraulikpumpen erreicht werden. Diese kann jedoch beispielsweise auch anderweitig erreicht werden. Es sei jedoch verstanden, dass auch unterschiedliche Zeiten verwendet werden können, bei welchen die jeweiligen Umschaltventile offen und geschlossen sind, um die Verfahrensführung an bestimmte Erfordernisse anzupassen.

Beispielsweise können die Umschaltventile derart geschaltet werden, dass das erste Umschaltventil jeweils eine kürzere Zeit offen ist als das zweite Umschaltventil.

Dies kann insbesondere dann angewendet werden, wenn die zweite Hydraulikpumpe bei gleicher Drehzahl eine höhere Förderleistung hat als die erste Hydraulikpumpe.

Beispielsweise kann in diesem Fall das zweite Umschaltventil jeweils doppelt so lange offen sein wie das erste Umschaltventil.

Die Zeiten, in welchen die Umschaltventile offen oder geschlossen sind, können insbesondere basierend auf einem Volumenmodell berechnet werden. Dies hat sich für die Praxis als gutes Modell erwiesen, um das Verfahren sinnvoll auszuführen.

Beispielsweise hat es sich bewährt, wenn das erste Umschaltventil und/oder das zweite Umschaltventil jeweils für 100 ms bis 200 ms, bevorzugt 150 ms, offen sind.

Jede Ausgangspumpe weist bevorzugt einen jeweiligen Ausgangsanschluss auf, welcher jeweils mit einer Anzahl von Bremszylindern des jeweiligen Hydraulikkreises verbunden ist. Durch die Bremszylinder kann die Bremskraft auf Bremsbeläge bzw. Bremsbacken oder andere Bremsvorrichtungen übertragen werden, so dass diese das Fahrzeug abbremsen können. Durch die eben beschriebene Verbindung kann die Hydraulikpumpe die Bremszylinder betätigen, indem sie ein Fluid bzw. eine Bremsflüssigkeit in diese pumpt. Damit kann beispielsweise eine Notbremsfunktion realisiert werden.

Zwischen dem Ausgangsanschluss und jedem Bremszylinder ist bevorzugt jeweils ein Einlassventil angeordnet, und die Einlassventile sind bevorzugt gegenüberliegend zu dem jeweiligen Bremszylinder über ein Trennventil mit dem Hauptbremszylinder verbunden. Die Einlassventile und die Trennventile können insbesondere zur Steuerung des Fluidstroms, beispielsweise zur typischen Durchführung eines Antiblockiersystem-Eingriffs, verwendet werden.

Jeder Bremszylinder ist bevorzugt über ein jeweiliges Auslassventil mit dem jeweiligen Niederdruckspeicher seines Hydraulikkreises verbunden. Damit kann überschüssiges Fluid in den Niederdruckspeicher abgegeben werden. Aus dem Niederdruckspeicher kann sich bevorzugt die jeweilige Hydraulikpumpe benötigtes Fluid ansaugen.

Das Verfahren kann gemäß einer Ausführung grundsätzlich angewandt werden, d.h. immer im Betrieb eines Fahrzeugs bzw. bei Betätigung der entsprechenden Hydraulikpumpen bzw. bei Durchführung eines Antiblockiersystem-Eingriffs.

Es kann jedoch auch vorgesehen sein, dass das Verfahren ansprechend darauf angewendet wird, dass eine Versorgungsspannung unterhalb eines ersten Schwellenwerts liegt, dass eine Temperatur von einer oder beiden der Hydraulikpumpen oberhalb eines zweiten Schwellenwerts liegt, oder dass ein Strom eines die Hydraulikpumpen antreibenden Motors oberhalb eines dritten Schwellenwerts liegt. In diesem Fall kann die Anwendung des Verfahrens auf Fälle beschränkt werden, in welchen ein zu hoher Strom zu besonderen Problemen führen würde. Ansonsten kann auf die Anwendung des Verfahrens verzichtet werden, d.h. es kann beispielsweise ein Antiblockiersystem-Eingriff oder ein anderer Eingriff durchgeführt werden, ohne dass eine abwechselnde Schaltung der Hydraulikpumpen erfolgt, so dass mehr Volumenstrom zur Verfügung steht.

Durch das Öffnen eines Umschaltventils kann insbesondere ein jeweiliger Hydraulikkreis kurzgeschlossen werden. Dadurch wird letztlich das entsprechende Fluid in den Kreislauf gepumpt, was nahezu widerstandslos erfolgt.

Die erste Hydraulikpumpe und die zweite Hydraulikpumpe sind bevorzugt mit unterschiedlichen Fluidreservoiren des Hauptbremszylinders verbunden. Dies entspricht der üblichen Ausführung eines Zweikreisbremssystems, so dass bei Ausfall eines Kreises der andere Kreis nicht oder möglichst wenig beeinträchtigt wird. Es kann jedoch alternativ auch vorgesehen sein, dass die erste Hydraulikpumpe und die zweite Hydraulikpumpe mit dem gleichen Fluidreservoir des Hauptbremszylinders verbunden sind.

Es kann beispielsweise davon gesprochen werden, dass zur Senkung des Strombedarfs die überschüssig installierte Pumpleistung bei hohen Drücken kurzgeschlossen wird. Es kann jeweils ein Pumpenkreis durch Öffnung eines Umschaltventils bzw. EUV-Ventils kurzgeschlossen werden. Dadurch kann ein Fahrer in die Pumpe eintreten und das Druckrückhalteventil schließen, wodurch kurzzeitig das Leerfördern des Niederdruckspeichers unterbrochen wird. Hierdurch wird der Stromverbrauch gegenüber beidkreisigem Fördern reduziert. Wechselt man dieses Vorgehen in schneller Folge in beiden Kreisen ab, so werden die Niederdruckspeicher beider Kreise während einer ABS-Regelung nicht wie bisher gleichzeitig durch die Rückförderpumpe entleert, sondern sequenziell, beispielsweise alle 150 ms im Wechsel. Über einen längeren Zeitraum gesehen werden die Niederdruckspeicher jedoch mindestens genauso schnell geleert wie bei einer Referenzanlage mit kleiner Pumpe, so dass funktional gegenüber dem Stand der Technik keine Einbußen zu erwarten sind.

Das Verfahren kann generell angewendet werden, oder es kann an bestimmte Rahmenbedingungen geknüpft werden. Beispielsweise kann es angewendet werden bei geringer Bordspannung, d.h. es wird nur eine geringe Pumpengeschwindigkeit möglich sein, daher dauert das Leerfördern der Niederdruckspeicher entsprechend länger. Dies würde zu einer langen und hohen Strombelastung führen.

Das Verfahren kann insbesondere bei hoher Temperatur angewendet werden, wobei zu bemerken ist, dass ein Motor durch hohe Temperatur geschwächt wird, wodurch auch das Leerfördern vom Niederdruckspeicher entsprechend länger dauert, was zu einer langen und hohen Strombelastung führen kann.

Bei tatsächlich erkannten hohen Strömen, was beispielsweise durch entsprechende Sensoreinheiten gemessen werden kann, kann auf den hohen Strombedarf mit diesem Verfahren als Sondermaßnahme reagiert werden.

Das Verhältnis der Leerförderzeiten beider Bremskreise kann an die Kreisaufteilung angepasst werden. Bei diagonal aufgeteilten Fahrzeugen kann insbesondere eine gleiche Förderdauer für beide Kreise Sinn ergeben. Für schwarz-weiß-aufgeteilte Fahrzeuge, bei welchen also ein Bremskreis auf die Vorderräder und ein weiterer Bremskreis auf die Hinterräder wirkt, können beispielsweise die Vorderachse 2/3 der Zeit und die Hinterachse 1/3 der Zeit einnehmen, und zwar wegen des unterschiedlichen Volumenumsatzes. Die Zeiten können auch an ein Volumenmodell einer Regelsoftware geknüpft werden.

Die Erfindung betrifft des Weiteren eine Vorrichtung, insbesondere ein Bremssystem, welche zur Durchführung eines erfindungsgemäßen Verfahrens konfiguriert ist.
Weitere Merkmale und Vorteile wird der Fachmann dem nachfolgend mit Bezug auf die beigefügte Zeichnung beschriebenen Ausführungsbeispiel entnehmen. Dabei zeigt:

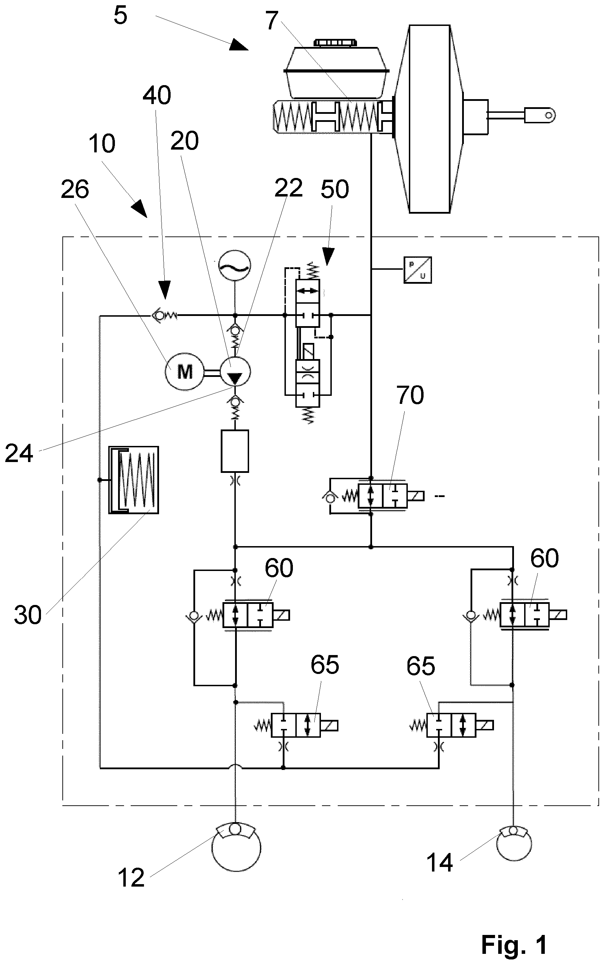

Fig. 1: ein Bremssystem zur Durchführung des erfindungsgemäßen Verfahrens.

Fig. 1 zeigt ein Bremssystem bzw. einen Ausschnitt aus einem Bremssystem, welches zur Durchführung eines erfindungsgemäßen Verfahrens gemäß einem Ausführungsbeispiel ausgelegt ist. Das erfindungsgemäße Verfahren wird mit Bezug auf diese Figur beschrieben.

Das in Fig. 1 dargestellte Bremssystem weist einen Hauptbremszylinder 5 auf. Der Hauptbremszylinder 5 weist ein erstes Fluidreservoir 7 auf.

Das Bremssystem weist ferner einen ersten hydraulischen Kreis 10 auf. Es weist außerdem einen zweiten hydraulischen Kreis auf. Der zweite hydraulische Kreis ist in Fig. 1 nicht dargestellt. Vielmehr ist lediglich der erste hydraulische Kreis 10 dargestellt, welcher mit dem bereits erwähnten ersten Fluidreservoir 7 verbunden ist. Es sei verstanden, dass der Hauptbremszylinder 5 des Weiteren ein zweites Fluidreservoir hat, welches nicht dargestellt bzw. nicht explizit beschrieben ist, und welches mit dem nicht dargestellten zweiten hydraulischen Kreis verbunden ist.

Der nicht dargestellte zweite hydraulische Kreis hat im Wesentlichen die gleiche bzw. eine ähnliche Funktionalität wie der dargestellte und nachfolgend beschriebene erste hydraulische Kreis 10. Auf entsprechende Unterschiede bzw. Zusammenhänge wird gegebenenfalls eingegangen werden.

Der erste hydraulische Kreis 10 weist eine erste Hydraulikpumpe 20 auf. Die erste Hydraulikpumpe 20 weist einen Ansauganschluss 22 und einen Ausgangsanschluss 24 auf. Sie ist dazu ausgebildet, eine Bremsflüssigkeit bzw. ein Fluid von dem Ansauganschluss 22 zu dem Ausgangsanschluss 24 zu pumpen. Hierfür ist sie mit einem Motor 26 gekoppelt, wobei der Motor 26 nicht nur die in Fig. 1 dargestellte Hydraulikpumpe 20 des ersten hydraulischen Kreises 10, sondern auch eine nicht dargestellte Hydraulikpumpe des zweiten hydraulischen Kreises antreibt.

Der erste hydraulische Kreis 10 weist ferner einen ersten Niederdruckspeicher 30 auf. Der erste Niederdruckspeicher 30 dient als Zwischenreservoir innerhalb des ersten hydraulischen Kreises 10.

Zwischen dem ersten Niederdruckspeicher 30 und dem Ansauganschluss 22 ist ein erstes Rückschlagventil 40 angeordnet. Dieses sorgt dafür, dass die Bremsflüssigkeit nur in der Richtung von dem ersten Niederdruckspeicher 30 zu dem Ansauganschluss 22, nicht jedoch umgekehrt fließen kann.

Der Ansauganschluss 22 der ersten Hydraulikpumpe 20 ist des Weiteren über ein erstes Umschaltventil 50 mit dem ersten Fluidreservoir 7 des Hauptbremszylinders 5 verbunden. Das erste Umschaltventil 50 ist ein elektrisch betätigbares Ventil, mit welchem die Verbindung geöffnet und geschlossen werden kann.

Der Ausgangsanschluss 24 der ersten Hydraulikpumpe 20 ist mit zwei Einlassventilen 60 verbunden, welche wiederum mit jeweils einem Bremszylinder 12, 14 verbunden sind. Dabei ist vorliegend eine Ausführung gewählt, bei welcher ein erster Bremszylinder 12 das vordere linke Rad bedient und ein zweiter Bremszylinder 14 das hintere rechte Rad bedient. Es sei erwähnt, dass dementsprechend der zweite hydraulische Kreis, welcher nicht dargestellt ist, ebenfalls zwei Bremszylinder aufweist, welche das vordere rechte und das hintere linke Rad bedienen. Eine derartige Ausführung ist insbesondere für Fahrzeuge mit Vorderradantrieb vorteilhaft.

Über die Einlassventile 60 kann der von der Hydraulikpumpe 20 erzeugte Druck auf die Bremszylinder 12, 14 geleitet werden, so dass diese eine Bremsung durchführen können.

Die beiden Einlassventile 60 sind wie gezeigt auch mit einem ersten Trennventil 70 verbunden, welches wiederum mit dem ersten Fluidreservoir 7 des Hauptbremszylinders 5 verbunden ist. Somit kann über die beiden Einlassventile 60 auch ein von dem Hauptbremszylinder 5 erzeugter Druck, welcher typischerweise durch Betätigung eines Bremspedals durch einen Fahrer erzeugt wird, zu den beiden Bremszylindern 12, 14 geleitet werden.

Die beiden Bremszylinder 12, 14 sind über jeweils ein Auslassventil 65 mit dem Niederdruckspeicher 30 verbunden. Dies ermöglicht es für den Fall, dass ein Antiblockiersystem-Eingriff erfolgt, Druck in den beiden Bremszylindern 12, 14 durch Öffnen der Auslassventile 65 gezielt abzubauen und in den Niederdruckspeicher 30 abzuleiten. Dadurch kann einem Blockieren der Räder vorgebeugt werden.

Dieses Fluid bzw. die Bremsflüssigkeit wird dann von der ersten Hydraulikpumpe 20 aus dem ersten Niederdruckspeicher 30 wieder zurückgepumpt.

Der Motor 26 und die erste Hydraulikpumpe 20 sind derart dimensioniert, dass die Förderleistung der ersten Hydraulikpumpe 20 bei dem für derartige Eingriffe typischen Betriebsdruck von etwa 200 bar erheblich höher ist als notwendig. Dies liegt daran, dass die erste Hydraulikpumpe 20 und der Motor 26 vorliegend dafür ausgelegt sind, dass das System auch eine Notbremsfunktion implementieren kann, bei welcher das Fahrzeug automatisiert bis zum Stillstand gebremst werden muss. Eine derartige Notbremsfunktion erfolgt typischerweise bei einem Druck von etwa 100 bar, während der bei einem Antiblockiersystem-Eingriff verwendete Druck bei etwa 200 bar liegt. Die dabei erzielbare hohe Förderleistung wird jedoch gar nicht benötigt.

Um in dieser Situation Strom zu sparen und eine schwächere Auslegung eines Fahrzeugbordnetzes zu ermöglichen, werden das erste Umschaltventil 50 und ein nicht dargestelltes zweites Umschaltventil des nicht dargestellten zweiten hydraulischen Kreises ständig alternierend geschaltet, so dass immer abwechselnd einer der beiden hydraulischen Kreise kurzgeschlossen ist. Die jeweilige Hydraulikpumpe des kurzgeschlossenen hydraulischen Kreises fördert dann keine Bremsflüssigkeit mehr aus dem jeweiligen Niederdruckspeicher, sondern fördert lediglich im Kreis, was nahezu ohne Widerstand erfolgt. Dies führt dazu, dass immer nur eine der beiden Hydraulikpumpen des in Fig. 1 dargestellten Bremssystems tatsächlich eine Förderleistung erbringt, so dass die Stromaufnahme des Motors 60 deutlich reduziert wird.

Erwähnte Schritte des erfindungsgemäßen Verfahrens können in der angegebenen Reihenfolge ausgeführt werden. Sie können jedoch auch in einer anderen Reihenfolge ausgeführt werden. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Die zur Anmeldung gehörigen Ansprüche stellen keinen Verzicht auf die Erzielung weitergehenden Schutzes dar. als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Verfahren zum Betreiben eines Bremssystems eines Kraftfahrzeugs,
- wobei das Bremssystem einen ersten hydraulischen Kreis (10), einen zweiten hydraulischen Kreis und einen Hauptbremszylinder (5) aufweist,
- wobei der erste hydraulische Kreis (10) zumindest eine erste von einem Elektromotor angetriebene Hydraulikpumpe (20) und ein erstes Umschaltventil (50) aufweist und der Hauptbremszylinder (5) über das erste Umschaltventil (50) mit einem ersten Ansauganschluss (22) der ersten Hydraulikpumpe (20) verbunden ist,
- wobei der erste hydraulische Kreis weiter zumindest einen ersten Niederdruckspeicher und ein erstes Rückschlagventil aufweist, wobei der erste Niederdruckspeicher über das erste Rückschlagventil mit dem ersten Ansauganschluss der ersten Hydraulikpumpe verbunden ist, so dass eine Durchflussrichtung des ersten Rückschlagventils zum ersten Ansauganschluss hinweist,
- wobei der zweite hydraulische Kreis zumindest eine zweite von einem Elektromotor angetriebene Hydraulikpumpe und ein zweites Umschaltventil aufweist und der Hauptbremszylinder (5) über das zweite Umschaltventil mit einem zweiten Ansauganschluss der zweiten Hydraulikpumpe verbunden ist,
- wobei, der zweite hydraulische Kreis ferner zumindest einen zweiten Niederdruckspeicher und ein zweites Rückschlagventil aufweist, wobei der zweite Niederdruckspeicher über das zweite Rückschlagventil mit dem zweiten Ansauganschluss der zweiten Hydraulikpumpe verbunden ist, so dass eine Durchflussrichtung des zweiten Rückschlagventils zum zweiten Ansauganschluss hinweist,
- wobei während kontinuierlichem Lauf der ersten Hydraulikpumpe (20) und der zweiten Hydraulikpumpe das erste Umschaltventil (50) und das zweite Umschaltventil alternierend zueinander geöffnet und geschlossen werden.

2. Verfahren nach Anspruch 1,
- wobei die erste Hydraulikpumpe (20) und die zweite Hydraulikpumpe von einem einzigen Elekromotor (26) angetrieben werden.

3. Verfahren nach einem der vorhergehenden Ansprüche,
- welches während eines Antiblockiersystem-Eingriffs ausgeführt wird, insbesondere bei einem Betriebspunkt von 150 bar bis 250 bar, bevorzugt 200 bar.

4. Verfahren nach einem der vorhergehenden Ansprüche,
- wobei die Umschaltventile (50) derart geschaltet werden, dass sie jeweils gleich lange Zeiten offen und geschlossen sind.

5. Verfahren nach einem der Ansprüche 1 bis 4,
- wobei die Umschaltventile (50) derart geschaltet werden, dass das erste Umschaltventil (50) jeweils eine kürzere Zeit offen ist als das zweite Umschaltventil.

6. Verfahren nach Anspruch 5,
- wobei die zweite Hydraulikpumpe bei gleicher Drehzahl eine höhere Förderleistung hat als die erste Hydraulikpumpe (20) .

7. Verfahren nach einem der Ansprüche 5 oder 6,
- wobei das zweite Umschaltventil jeweils doppelt so lange offen ist wie das erste Umschaltventil (50).

8. Verfahren nach einem der vorhergehenden Ansprüche,
- wobei Zeiten, in welchen die Umschaltventile (50) offen oder geschlossen sind, basierend auf einem Volumenmodell berechnet werden.

9. Verfahren nach einem der vorhergehenden Ansprüche,
- wobei das erste Umschaltventil (50) und/oder das zweite Umschaltventil jeweils für 100 ms bis 200 ms, bevorzugt 150 ms, offen sind.

10. Verfahren nach einem der vorhergehenden Ansprüche,
- wobei jede Hydraulikpumpe (20) einen jeweiligen Ausgangsanschluss (24) aufweist, welcher jeweils mit einer Anzahl von Bremszylindern (12, 14) des jeweiligen hydraulischen Kreises (10) verbunden ist.

11. Verfahren nach Anspruch 10,
- wobei zwischen dem Ausgangsanschluss (24) und jedem Bremszylinder (12, 14) jeweils ein Einlassventil (60) angeordnet ist und die Einlassventile (60) gegenüberliegend zu dem jeweiligen Bremszylinder (12, 14) über ein Trennventil (70) mit dem Hauptbremszylinder (5) verbunden sind;
und/oder
- wobei jeder Bremszylinder (12, 14) über ein jeweiliges Auslassventil (65) mit dem jeweiligen Niederdruckspeicher (30) seines hydraulischen Kreises (10) verbunden ist.

12. Verfahren nach einem der vorhergehenden Ansprüche,
- wobei das Verfahren ansprechend auf
- eine Versorgungsspannung unterhalb eines ersten Schwellenwerts,
- eine Temperatur von einer oder beider der Hydraulikpumpen (20) oberhalb eines zweiten Schwellenwerts, oder
- einen Strom eines die Hydraulikpumpen (20) antreibenden Motors (26) oberhalb eines dritten Schwellenwerts
angewandt wird.

13. Verfahren nach einem der vorhergehenden Ansprüche,
- wobei durch das Öffnen eines Umschaltventils (50) ein jeweiliger hydraulischer Kreis (10) kurzgeschlossen wird.

14. Verfahren nach einem der vorhergehenden Ansprüche,
- wobei die erste Hydraulikpumpe (20) und die zweite Hydraulikpumpe mit unterschiedlichen Fluidreservoiren (7) des Hauptbremszylinders (5) verbunden sind.

## Claims

1. Method for operating a brake system of a motor vehicle,
- wherein the brake system has a first hydraulic circuit (10), a second hydraulic circuit and a master brake cylinder (5),
- wherein the first hydraulic circuit (10) has at least a first hydraulic pump (20), which is driven by an electric motor, and a first switching valve (50), and the master brake cylinder (5) is connected via the first switching valve (50) to a first suction port (22) of the first hydraulic pump (20),
- wherein the first hydraulic circuit further has at least a first low-pressure accumulator and a first non-return valve, wherein the first low-pressure accumulator is connected via the first non-return valve to the first suction port of the first hydraulic pump, with the result that a throughflow direction of the first non-return valve is directed towards the first suction port,
- wherein the second hydraulic circuit has at least a second hydraulic pump, which is driven by an electric motor, and a second switching valve, and the master brake cylinder (5) is connected via the second switching valve to a second suction port of the second hydraulic pump,
- wherein the second hydraulic circuit further has at least a second low-pressure accumulator and a second non-return valve, wherein the second low-pressure accumulator is connected via the second non-return valve to the second suction port of the second hydraulic pump, with the result that a throughflow direction of the second non-return valve is directed towards the second suction port,
- wherein, during continuous running of the first hydraulic pump (20) and the second hydraulic pump, the first switching valve (50) and the second switching valve are opened and closed in an alternating manner to one another.

2. Method according to Claim 1,
- wherein the first hydraulic pump (20) and the second hydraulic pump are driven by a single electric motor (26).

3. Method according to either of the preceding claims,
- which is carried out during an anti-locking system engagement, in particular at an operating point of 150 bar to 250 bar, preferably 200 bar.

4. Method according to one of the preceding claims,
- wherein the switching valves (50) are switched in such a way that they are in each case open and closed for equally long times.

5. Method according to one of Claims 1 to 4,
- wherein the switching valves (50) are switched in such a way that the first switching valve (50) is in each case open for a shorter time than the second switching valve.

6. Method according to Claim 5,
- wherein, for the same speed, the second hydraulic pump has a higher delivery power than the first hydraulic pump (20).

7. Method according to either of Claims 5 and 6,
- wherein the second switching valve is in each case open for twice as long as the first switching valve (50).

8. Method according to one of the preceding claims,
- wherein times in which the switching valves (50) are open or closed are calculated on the basis of a volume model.

9. Method according to one of the preceding claims,
- wherein the first switching valve (50) and/or the second switching valve are/is in each case open for 100 ms to 200 ms, preferably 150 ms.

10. Method according to one of the preceding claims,
- wherein each hydraulic pump (20) has a respective outlet port (24) which is in each case connected to a number of brake cylinders (12, 14) of the respective hydraulic circuit (10) .

11. Method according to Claim 10,
- wherein in each case an inlet valve (60) is arranged between the outlet port (24) and each brake cylinder (12, 14), and the inlet valves (60) are connected via an isolation valve (70) to the master brake cylinder (5) so as to be situated opposite to the respective brake cylinder (12, 14);
and/or
- wherein each brake cylinder (12, 14) is connected via a respective outlet valve (65) to the respective low-pressure accumulator (30) of its hydraulic circuit (10).

12. Method according to one of the preceding claims,
- wherein the method is applied in response to
- a supply voltage below a first threshold value,
- a temperature of one or both of the hydraulic pumps (20) above a second threshold value, or
- a current of a motor (26), which drives the hydraulic pumps (20), above a third threshold value.

13. Method according to one of the preceding claims,
- wherein a respective hydraulic circuit (10) is short-circuited by opening a switching valve (50) .

14. Method according to one of the preceding claims,
- wherein the first hydraulic pump (20) and the second hydraulic pump are connected to different fluid reservoirs (7) of the master brake cylinder (5).

## Revendications

1. Procédé pour faire fonctionner un système de freinage d'un véhicule automobile,
- le système de freinage présentant un premier circuit hydraulique (10), un deuxième circuit hydraulique et un cylindre de frein principal (5),
- le premier circuit hydraulique (10) présentant au moins une première pompe hydraulique (20) entraînée par un moteur électrique et une première soupape de commutation (50) et le cylindre de frein principal (5) étant connecté par le biais de la première soupape de commutation (50) à un premier raccord d'aspiration (22) de la première pompe hydraulique (20),
- le premier circuit hydraulique présentant en outre au moins un premier accumulateur basse pression et un premier clapet antiretour, le premier accumulateur basse pression étant connecté par le biais du premier clapet antiretour au premier raccord d'aspiration de la première pompe hydraulique de telle sorte qu'une direction de débit du premier clapet antiretour soit orientée vers le premier raccord d'aspiration,
- le deuxième circuit hydraulique présentant au moins une deuxième pompe hydraulique entraînée par un moteur électrique et une deuxième soupape de commutation, et le cylindre de frein principal (5) étant connecté par le biais de la deuxième soupape de commutation à un deuxième raccord d'aspiration de la deuxième pompe hydraulique,
- le deuxième circuit hydraulique présentant en outre au moins un deuxième accumulateur basse pression et un deuxième clapet antiretour, le deuxième accumulateur basse pression étant connecté par le biais du deuxième clapet antiretour au deuxième raccord d'aspiration de la deuxième pompe hydraulique de telle sorte qu'une direction de débit du deuxième clapet antiretour soit orientée vers le deuxième raccord d'aspiration,
- la première soupape de commutation (50) et la deuxième soupape de commutation étant ouvertes et fermées en alternance l'une avec l'autre pendant un fonctionnement continu de la première pompe hydraulique (20) et de la deuxième pompe hydraulique.

2. Procédé selon la revendication 1,
- dans lequel la première pompe hydraulique (20) et la deuxième pompe hydraulique sont entraînées par un moteur électrique unique (26) .

3. Procédé selon l'une quelconque des revendications précédentes,
- qui est mis en œuvre pendant une intervention du système d'antiblocage des freins, en particulier à un point de fonctionnement de 150 bars à 250 bars, de préférence de 200 bars.

4. Procédé selon l'une quelconque des revendications précédentes,
- dans lequel les soupapes de commutation (50) sont commutées de telle sorte qu'elles soient à chaque fois ouvertes et fermées pendant des durées identiques.

5. Procédé selon l'une quelconque des revendications 1 à 4,
- dans lequel les soupapes de commutation (50) sont commutées de telle sorte que la première soupape de commutation (50) soit à chaque fois ouverte pendant un temps plus court que la deuxième soupape de commutation.

6. Procédé selon la revendication 5,
- dans lequel la deuxième pompe hydraulique, à une vitesse de rotation identique, présente une puissance de refoulement supérieure à la première pompe hydraulique (20).

7. Procédé selon l'une quelconque des revendications 5 et 6,
- dans lequel la deuxième soupape de commutation est à chaque fois ouverte deux fois plus longtemps que la première soupape de commutation (50).

8. Procédé selon l'une quelconque des revendications précédentes,
- dans lequel les durées pendant lesquelles les soupapes de commutation (50) sont ouvertes ou fermées sont calculées sur la base d'un modèle volumique.

9. Procédé selon l'une quelconque des revendications précédentes,
- dans lequel la première soupape de commutation (50) et/ou la deuxième soupape de commutation sont ouvertes à chaque fois pendant 100 ms à 200 ms, de préférence pendant 150 ms.

10. Procédé selon l'une quelconque des revendications précédentes,
- dans lequel chaque pompe hydraulique (20) présente un raccord de sortie respectif (24) qui est à chaque fois connecté à une pluralité de cylindres de frein (12, 14) du circuit hydraulique respectif (10).

11. Procédé selon la revendication 10,
- dans lequel, entre le raccord de sortie (24) et chaque cylindre de frein (12, 14), est à chaque fois disposée une soupape d'entrée (60) et les soupapes d'entrée (60) sont connectées, à l'opposé du cylindre de frein respectif (12, 14), par le biais d'une soupape de séparation (70) au cylindre de frein principal (5) ;
et/ou
- dans lequel chaque cylindre de frein (12, 14) est connecté par le biais d'une soupape de sortie respective (65) à l'accumulateur basse pression respectif (30) de son circuit hydraulique (10).

12. Procédé selon l'une quelconque des revendications précédentes,
- le procédé étant mis en œuvre en réponse à
- une tension d'alimentation en dessous d'une première valeur seuil,
- une température d'une ou des deux pompes hydrauliques (20) au-dessus d'une deuxième valeur seuil, ou
- un courant d'un moteur (26) entraînant les pompes hydrauliques (20) au-dessus d'une troisième valeur seuil.

13. Procédé selon l'une quelconque des revendications précédentes,
- dans lequel un circuit hydraulique respectif (10) est court-circuité par l'ouverture d'une soupape de commutation (50).

14. Procédé selon l'une quelconque des revendications précédentes,
- dans lequel la première pompe hydraulique (20) et la deuxième pompe hydraulique sont connectées à des réservoirs de fluide différents (7) du cylindre de frein principal (5) .
